# EUROPÄISCHE PATENTSCHRIFT

(11) **EP 1 712 110 B1**
(45) Veröffentlichungstag und Bekanntmachung des Hinweises auf die Patenterteilung: **09.05.2007**
(21) Anmeldenummer: 05714887.6
(22) Anmeldetag: 21.01.2005
(51) Int. Cl.: H05B 37/02, H02J 13/00

(54) **EINRICHTUNG ZUR AUTOMATISIERUNG DER GEBÄUDETECHNIK**
DEVICE FOR AUTOMATING BUILDING ENGINEERING
DISPOSITIF D'AUTOMATISATION DANS LE DOMAINE DU BATIMENT

(30) Priorität: 03.02.2004 DE 102004005219
(43) Veröffentlichungstag der Anmeldung: 18.10.2006
(73) Patentinhaber: Baumgaertner, Udo, 76709 Kronau (DE); Stiehl, Gregor, 74889 Sinsheim-Steinsfurt (DE)
(72) Erfinder: Baumgaertner, Udo, 76709 Kronau (DE); Stiehl, Gregor, 74889 Sinsheim-Steinsfurt (DE)
(74) Vertreter: Meyer-Roedern, Giso
(86) Internationale Anmeldenummer: PCT/DE2005/000081
(87) Internationale Veröffentlichungsnummer: WO 2005/076670

(56) Entgegenhaltungen:
- EP-A- 1 170 848
- WO-A-99/60538
- DE-A1- 10 035 813

## Beschreibung

Die Erfindung betrifft eine Einrichtung zur Automatisierung der Betriebstechnik sowie gegebenenfalls Sicherheitsüberwachung eines Gebäudes, einer industriellen Anlage, eines Gebäude- und/oder Anlagenkomplexes oder einer Nutzungseinheit davon, der/die/das mehrere Räume aufweist.

Das Konzept einer intelligenten Automatisierung der Gebäudetechnik von Wohn- und/oder Geschäftsgebäuden wird seit mindestens 15 Jahren mit verschiedenen Ansätzen verfolgt. Durch die Vernetzung ursprünglich separater Regel- und/oder Steuerfunktionen lassen sich sprunghafte Verbesserungen in Wohnkomfort, Effektivität des Energieeinsatzes und Sicherheit erzielen. Getrieben wird die Automatisierung von dem drastisch anwachsenden Integrationsgrad in der Digitalelektronik mit immer größerer Speicherkapazität und höherer Rechengeschwindigkeit der Prozessoren zu gleichbleibenden oder gar sinkenden Kosten.

In Fachkreisen gut bekannt ist der "Europäische Installations Bus" (EIB; auch INSTABUS), ein dezentral aufgebautes Bussystem für die Automatisierung der Gebäudetechnik. Auf dem Bus verteilt liegen Sensoren und Aktoren, die allesamt über einen eigenen Mikroprozessor verfügen. Der EIB gilt deshalb als Bussystem mit dezentraler Intelligenz. Alle Teilnehmer sind durch ein zweiadriges Kabel miteinander verbunden, über das sowohl die elektrische Versorgung, als auch der Datenaustausch erfolgt. Die Teilnehmer werden durch eine eindeutige physikalische Adresse auf dem Bus identifiziert.

Die Sensoren nehmen Meßgrößen wie Temperatur oder Helligkeit auf, und sie bauen das Meßsignal in ein Telegramm ein, das auf dem Bus gesendet wird. Alle Aktoren, die eine entsprechende Zieladresse aufweisen, empfangen die Information des Telegramms, und sie führen eine entsprechende Regel- und/oder Steuerfunktion aus, z. B. die Betätigung eines Heizungsventils, das Aktivieren oder Deaktivieren des Kühlaggregats einer Klimaanlage, das Ein- oder Ausschalten eines Lüfters, die Stellbetätigung einer Jalousie, das Dimmen der Beleuchtung und anderes mehr.

Nachteilig bei dem EIB ist der hohe bauliche Aufwand der einzelnen Komponenten, die allesamt über einen eigenen Mikroprozessor verfügen. Für alle Aufgaben sind separate Komponenten zu installieren, deren Verbindung durch ein besonderes Kabel einen hohen Installationsaufwand bedingt. Die Komponenten liegen in ihren Grundfunktionen fest. Sie bieten für die Parametrisierung, d. h. individuelle Funktionseinstellung nur wenig Spielraum, weshalb die Flexibilität des Systems zu wünschen übrig läßt. Die dezentrale Busstruktur erlaubt es dem Betreiber nicht, das System frei zu konfigurieren. Die Konfigurierung liegt vielmehr in der Hand von autorisiertem Fachpersonal. Viele Installateure scheuen aber die hohen Einstiegskosten und die zeitaufwendige Programmierung. Der EIB wurde daher zwar erfolgreich in Großbauten mit vorwiegend gewerblicher Nutzung eingesetzt. Der breite Erfolg im privaten Haus- und Wohnungsbau speziell bei kleineren Einheiten blieb dem EIB jedoch versagt.

Zur Abrundung des EIB wurde der Powerline EIB entwickelt. Er erlaubt es, auch solche Komponenten in das Bussystem einzubinden, an deren Verkabelung nichts mehr geändert werden kann. Der Powerline EIB beruht auf dem Konzept, den Datenaustausch zwischen den Komponenten schmalbandig über das elektrische Versorgungsnetz zu bewirken. Das ist technisch alles andere als ausgereift. Besonders kritisch ist die Dämpfung des sich auf der Netzleitung ausbreitenden Bussignals durch jeden einzelnen elektrischen Verbraucher. Sendeleistung und Frequenzband sind durch amtliche Vorschriften eng beschränkt, und die Datenübertragungsrate ist gering. Als Busverbindung ist daher ein Datenkabel dem Powerline EIB im allgemeinen vorzuziehen.

Allein auf Funk beruhende Fernsteuerungen haben nach gegenwärtigem Stand Einwirkung nur auf einen oder einige wenige Aktor(en). Die umfassenden Regel- und/oder Steuerfunktionen eines Bussystems werden nicht erreicht. Die Zuverlässigkeit der Funkübertragung läßt zu wünschen übrig, und ihre physiologischen Auswirkungen sind ungeklärt. Nicht zuletzt stehen dem breiten Einsatz von Funkfernsteuerungen hohe Investitionskosten entgegen.

Für die Automatisierung der Gebäudetechnik ist des weiteren der PHC-Bus (PEHA House Control der Firma PEHA) bekannt. Dieser Bus ist für kleinere Objekte, insbesondere Ein- und Mehrfamilienhäuser, bestimmt. Er hat ein Zentralgerät, das üblicherweise im Sicherungskasten untergebracht wird und sämtliche Regel- und/oder Steuerfunktionen ausführt.

Nachteilig bei dem PHC-Bus ist, daß jeder Sensor und Aktor einzeln daran angeschlossen werden muß. Das bedingt einen hohen Installationsaufwand. Aufgrund der Busstruktur mit zentraler Intelligenz sind die Anwendungsmöglichkeiten des PHC-Bus auf wenige einfache Melde- und Bedienfunktionen beschränkt.

Als jüngstes intelligentes Netzwerk für die Automatisierung der Gebäudetechnik wurde das LCN (Local Control Network) konzipiert, bei dem intelligente Knoten über einen Bus kommunizieren. Die Intelligenz ist dezentral strukturiert. Ein Zentralgerät hat der LCN nicht. In LCN-Baugruppen sind Sensor- und Aktorfunktionen vereint. Zur Datenübertragung kann, so vorhanden, eine freie Ader des elektrischen Versorgungsnetzes verwendet werden.

Nachteilig bei dem LCN ist der immer noch sehr hohe bauliche Aufwand bedingt durch die lokale eigene Intelligenz einer jeden LCN-Baugruppe. Aufgrund der Busstruktur mit dezentraler Intelligenz ist eine freie Konfigurierbarkeit durch den Betreiber nicht leichterhand gegeben.

Die WO 99/60 538 A1 beschreibt ein für einen Raum bestimmtes Überwachungs- und/oder Meß- und/oder Regel- und/oder Steuermodul (Raummodul) mit integrierter Sensorik und elektrischen Leistungsanschlüssen, die nicht auf je die Zahl Pole des elektrischen Versorgungsnetzes beschränkt sind. Das Modul kann in einem Netzwerk liegen und darüber kommunizieren.

Die DE 100 35 813 A1 und EP 1 170 848 A2 beschreiben Gebäudeinstallationssysteme und zugehörige Installationsgeräte für den Anschluß an den Europäischen Installationsbus EIB.

Aufgabe der Erfindung ist es, eine Einrichtung der eingangs genannten Art zu schaffen, die sich durch einen geringen Gestehungs- und Installationsaufwand auszeichnet und dem Betreiber die Möglichkeit einer freien Konfigurierung eröffnet.

Bei der diese Aufgabe lösenden Einrichtung ist für einen jeden Raum ein Überwachungs- und/oder Meß- und/oder Regel- und/oder Steuermodul (Raummodul) mit integrierter Sensorik und einem oder mehreren elektrischen Leistungsanschluß/Leistungsanschlüssen mit je nicht mehr als den Polen des elektrischen Versorgungsnetzes vorgesehen. Wenigstens zwei Raummodule liegen mit einem übergeordneten Überwachungs- und/oder Meß- und/oder Regel- und/oder Steuermodul (Verteilermodul) in einem Datenbus. Wenigstens zwei Verteilermodule liegen mit einem übergeordneten Überwachungs- und/oder Meß- und/oder Regel- und/oder Steuermodul (Zentralmodul) in einem Datenbus.

Erfindungsgemäß ist die komplette Sensorik sowie Regelung und/oder Steuerung der elektrischen Leistungsanschlüsse für Steckdosen, Beleuchtung und alle mögliche Aktorik innerhalb jeweils eines Raums an einem einzigen Raummodul zusammengefaßt. Die Sensorik ist integraler Teil des Raummoduls. Sie kann Temperatur und/oder Helligkeit und/oder Luftzusammensetzung, insbesondere Konzentration von CO₂, anderen Gasen oder Rauch, und/oder Bewegung im Raum erfassen. Die Aktorik ist über das herkömmliche, normalerweise dreiadrige, bisweilen auch fünfadrige elektrische Versorgungsnetz an das Raummodul angeschlossen. Die Leistungsanschlüsse des Raummoduls für Steckdosen, Beleuchtung und Aktorik können sich sowohl Ein-Aus steuern, als auch in ihrer Ausgangsspannung kontinuierlich oder in Stufen regeln und/oder steuern lassen. Soweit es überhaupt einer Datenübertragung zwischen Raummodul und Aktorik bedarf, findet diese über einen der Leiter des elektrischen Versorgungsnetzes, vorzugsweise den Null-Leiter statt. Die Aktorik hat normalerweise keine lokale Intelligenz. Entsprechend konventionell und unaufwendig gestalten sich Aufbau und Installation der Aktorik unter Verwendung von Standardkomponenten.

Wenigstens zwei Raummodule liegen mit einem Verteilermodul in einem Datenbus, und wenigstens zwei Verteilermodule mit dem Zentralmodul in einem Datenbus. An den Verteilermodulen laufen die Meßwerte der Sensorik zusammen. Das jeweilige Verteilermodul hat die Aufgabe, die Regel- und/oder Steuerfunktion der Raummodule zu koordinieren, und es kann selbst Regel- und/oder Steuer- und/oder Überwachungs funktionen auf dem übergeordneten Niveau beispielsweise einer Nutzungseinheit übernehmen. Dazu gehört die Erfassung des momentanen und/oder kumulierten Verbrauchs von Öl, Gas, Elektrizität, Warm- und Kaltwasser, Druckluft, Vakuum, Kältemittel u.s.w. sowie die Überwachung des Zugangs zu der Nutzungseinheit. Zu letzterem Zweck sollte das Verteilermodul geeignet sein, das Videosignal einer oder mehrerer Überwachungskamera(s) zu verarbeiten. Da nur die Raummodule mit dem Verteilermodul in einem Datenbus liegen, ist der Installationsaufwand für den Bus gering.

Das Verteilermodul eröffnet dem Betreiber den Zugriff auf die Konfigurierung der Betriebstechnik auf dem Niveau der jeweiligen Nutzungseinheit. Das Verteilermodul läßt sich programmieren. Es kann dazu einen Anschluß für einen PC, MAC, PDA o.ä. haben, auf dem eine benutzerfreundliche Konfigurierungssoftware läuft. Dem Betreiber stehen sämtliche Meßwerte der Sensorik und die Gestaltung der daran anknüpfenden Regel- und/oder Steuerfunktionen zur Verfügung. Der Betreiber kann die Konfigurierung eigenhändig vornehmen, um sie bei Bedarf auszubauen und an die individuellen Wünsche und Gegebenheiten anzupassen.

Bei einer bevorzugten Ausführungsform kommuniziert wenigstens ein Verteilermodul mit der Außenwelt. Es kann dazu ein Modem mit einem Analog-, ISDN-, UMTS-, GSM-, Funk- oder anderen geeigneten Anschluß haben. Die Kommunikation nach außen an ein übergeordnetes System empfiehlt sich für Alarmmeldungen der Raumüberwachung sowie Stör- und Servicemeldungen der Heizung und der Klimaanlage. Empfänger der Meldung kann beispielsweise ein Computer, Telefon, Mobiltelefon oder UMTS-Endgerät sein. Eine Kommunikation mit dem Verteilermodul von aussen ermöglicht die Fernbedienung ausgewählter Funktionen.

Die Verteilermodule mehrerer Nutzungseinheiten liegen mit dem übergeordneten zentralen Überwachungs- und/oder Meß- und/oder Regel- und/oder Steuermodul (Zentralmodul) des Gebäudes, Gebäude- oder Anlagenkomplexes in einem Datenbus. An dem Zentralmodul laufen die Meßwerte der Sensorik der gesamten Einheit zusammen. Das Zentralmodul hat die Aufgabe, die Regel- und/oder Steuerfunktionen der Verteilermodule zu koordinieren, und es kann selbst Regel- und/oder Steuer- und/oder Überwachungsfunktionen auf dem übergeordneten Niveau der gesamten Einheit übernehmen. Dazu gehört die gesamte Außenüberwachung, die Überwachung eines zentralen Ein- und Ausgangsbereichs, einer Parkzone, einer Tiefgarage, die Regelung und/oder Steuerung einer zentralen Heizungsanlage und vorhandenenfalls Energiegewinnungsanlage, beispielsweise Solaranlage, die Erfassung des momentanen und/oder kumulierten Verbrauchs von Öl, Gas, Elektrizität, Warm- und Kaltwasser auf dem Niveau der ganzen Einheit und anderes mehr. Das Zentralmodul sollte geeignet sein, das Videosignal einer oder mehrerer Überwachungskamera(s) zu verarbeiten. Da nur die Verteilermodule mit dem Zentralmodul in einem Datenbus liegen, ist der Installationsaufwand für den Bus gering.

Vorzugsweise läßt sich auch das Zentralmodul programmieren und zur Konfigurierung an einen PC, MAC, PDA o.ä. anschließen. Die Konfigurierung sollte Fachpersonal vorbehalten bleiben, das für die ganze Einheit verantwortlich ist, beispielsweise der Hausverwaltung.

Bei einer bevorzugten Ausführungsform kommuniziert das Zentralmodul mit der Außenwelt. Es kann dazu ein Modem mit einem Analog-, ISDN- oder GSM-Anschluß haben. Die Kommunikation nach außen an ein übergeordnetes System empfiehlt sich für Alarmmeldungen der Gebäudeüberwachung sowie Stör- und Servicemeldungen der Heizung, Klima- und Solaranlage. Empfänger der Meldung kann beispielsweise ein Computer, Telefon, Mobiltelefon oder ein UMTS-Endgerät sein. Eine Kommunikation von außen erlaubt die Fernbedienung ausgewählter Funktionen.

Verglichen mit herkömmlichen Bussystemen für die Automatisierung der Gebäudetechnik verringert die Erfindung den apparativen Aufwand und Installationsaufwand beträchtlich. Erreicht wird das durch die Zusammenfassung der Sensorik und der Regel- und/oder Steuerfunktionen für die Aktorik eines Raums in einem Raummodul und den unaufwendigen Anschluß herkömmlicher Aktorik ohne lokale Intelligenz über das elektrische Versorgungsnetz daran, die Datenbusverbindung der Raummodule mit einem Verteilermodul und die Datenbusverbindung der Verteilermodule mit dem Zentralmodul. Man erreicht so einen Informationsfluß und eine Regel- und/oder Steuerhierarchie, die die tatsächlichen Zugriffsinteressen und -kompetenzen optimal reflektieren.

Die Erfindung wird im folgenden anhand von in der Zeichnung dargestellten Ausführungsbeispielen näher erläutert. Schematisch zeigen:
- Fig. 1: die Basisvariante eines Raummoduls;
- Fig. 2: die Ausbauvariante eines Raummoduls; und

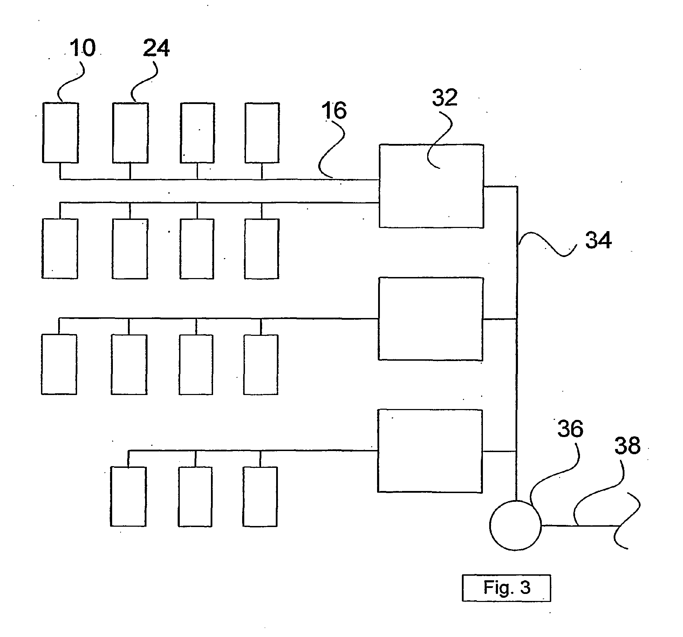

- Fig. 3: eine Schaltung, bei der mehrere Raummodule in einem Datenbus mit einem Verteilermodul, und mehrere Verteilermodule in einem Datenbus mit einem Zentralmodul liegen.

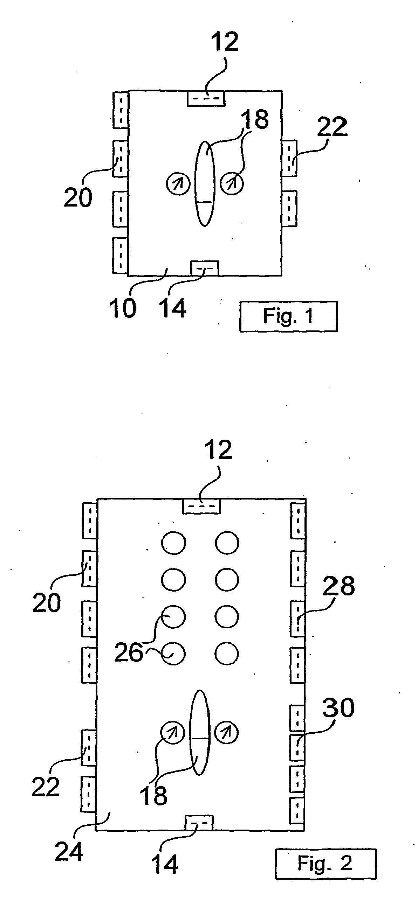

Das Raummodul 10 gemäß Fig. 1 hat etwa die Größe eines Installationsschalters. Es paßt also hinter eine herkömmliche Einfachschalterblende.

Das Raummodul 10 hat einen ersten Eingang 12 für den Anschluß an das dreiadrige elektrische Versorgungsnetz und einen zweiten Eingang 14 für den Anschluß an einen Datenbus 16. Bei dem dargestellten Ausführungsbeispiel ist der Datenbus 16 ein verdrilltes zweiadriges Kabel. Es kann sich aber auch um eine Glasfaserleitung, Powerline, Funkstrekke o.ä. handeln.

Das Raummodul 10 hat eine integrierte Sensorik 18 z. B. für Temperatur, Helligkeit, Gase, Bewegung. Es hat des weiteren sechs Ausgänge 20, 22 für den Anschluß von Steckdosen, Beleuchtung und vielfältiger Aktorik jeweils über ein dreiadriges Kabel des elektrischen Versorgungsnetzes. Vier Ausgänge 20 sind Ein-Aus geschaltet, und zwei Ausgänge 22 gedimmt.

Das Raummodul 24 gemäß Fig. 2 hat etwa die Größe zweier Installationsschalter. Es paßt also hinter eine herkömmliche Doppelschalterblende.

Das Raummodul 24 hat zusätzlich sechs frei programmierbare Taster 26 auf der Frontplatte, vier Eingänge 28 für den Anschluß konventioneller Taster oder Schalter über das dreiadrige elektrische Versorgungsnetz und vier Kleinspannungseingänge 30 für Taster, Türkontakte, Telekommunikation o.ä. Überdies kann das Raummodul 24 über Funk oder Infrarot mit einer Fernsteuerung kommunizieren. Niederspannungs- und Netzspannungskreise sind in dem Raummodul 24 strikt getrennt.

In je einem Raum einer Gebäude-Nutzungseinheit installierte Raummodule 10, 24 liegen mit dem Datenbus 16 an einem Verteilermodul 32, das in dem Sicherungskasten der Nutzungseinheit untergebracht ist. Das Verteilermodul 32 kann in verschiedenen Ausbaustufen realisiert werden und mehrere parallele Datenbuskanäle haben.

Die Verteilermodule 32 mehrerer Nutzungseinheiten liegen in einem gemeinsamen Datenbus 34 mit einem Zentralmodul 36 des ganzen Gebäudes, das in dessen Hauptverteilerschrank untergebracht ist. Bei dem dargestellten Ausführungsbeispiel ist der Datenbus 34 ein verdrilltes zweiadriges Kabel. Es kann sich aber auch um eine Glasfaserleitung, Powerline, Funkstrecke o.ä. handeln. Das Zentralmodul 36 kann in verschiedenen Ausbaustufen realisiert werden und mit der Außenwelt des Gebäudes kommunizieren 38.

### Liste der Bezugszeichen

- 10: Raummodul
- 12: Eingang Netz
- 14: Eingang Datenbus
- 16: Datenbus
- 18: Sensorik
- 20: Ein-Aus geschalteter Anschluß
- 22: gedimmter Anschluß
- 24: Raummodul
- 26: Taster
- 28: Eingang Netz
- 30: Niederspannungseingang
- 32: Verteilermodul
- 34: Datenbus
- 36: Zentralmodul
- 38: Kommunikation zur Außenwelt

## Patentansprüche

1. Einrichtung zur Automatisierung der Betriebstechnik sowie gegebenenfalls Sicherheitsüberwachung eines Gebäudes, einer industriellen Anlage, eines Gebäude- und/oder Anlagenkomplexes oder einer Nutzungseinheit davon, der/die/das mehrere Räume aufweist und bei dem/der für einen jeden Raum ein Überwachungs- und/oder Meß- und/oder Regel- und/oder Steuermodul (Raummodul 10, 24) mit integrierter Sensorik (18) und einem oder mehreren elektrischen Leistungsanschluß/Leistungsanschlüssen (20, 22) mit je nicht mehr als den Polen des elektrischen Versorgungsnetzes vorgesehen ist, wobei wenigstens zwei Raummodule (10, 24) mit einem übergeordneten Verteilermodul (32) in einem Datenbus (16), und wenigstens zwei Verteilermodule (32) mit einem übergeordneten Überwachungs- und/oder Meß- und/oder Regel- und/oder Steuermodul (Zentralmodul 36) in einem Datenbus (34) liegen.

2. Einrichtung nach Anspruch 1, **dadurch gekennzeichnet, daß** das Raummodul (10, 24) mit integrierter Sensorik (18) für Temperatur und/oder Helligkeit und/oder Luftzusammensetzung, insbesondere Konzentration von CO₂, anderen Gasen oder Rauch, und/oder Bewegung im Raum versehen ist.

3. Einrichtung nach Anspruch 1 oder 2, **dadurch gekennzeichnet, daß** wenigstens ein Leistungsanschluß (20) des Raummoduls (10, 24) Ein-Aus steuerbar ist.

4. Einrichtung nach einem der Ansprüche 1 bis 3, **dadurch gekennzeichnet, daß** wenigstens ein Leistungsanschluß (22) des Raummoduls (10, 24) in seiner Ausgangsspannung kontinuierlich oder in Stufen regel- und/oder steuerbar ist.

5. Einrichtung nach einem der Ansprüche 1 bis 4, **dadurch gekennzeichnet, daß** die Verteilermodule (32) programmierbar sind.

6. Einrichtung nach einem der Ansprüche 1 bis 5, **dadurch gekennzeichnet, daß** wenigstens ein Verteilermodul (32) mit der Außenwelt kommuniziert.

7. Einrichtung nach einem der Ansprüche 1 bis 6, **dadurch gekennzeichnet, daß** das Zentralmodul (36) programmierbar ist.

8. Einrichtung nach einem der Ansprüche 1 bis 7, **dadurch gekennzeichnet, daß** das Zentralmodul (36) mit der Außenwelt kommuniziert.

## Claims

1. Device for automating building services and possibly safety monitoring of a building, of an industrial plant, of a building and/or plant complex or a working unit thereof, which has a plurality of rooms, wherein a monitoring and/or measuring and/or closed-loop control and/or open-loop control module (room module 10, 24) with integrated sensor system (18) and one or more electrical power terminal/power terminals (20, 22) having no more than the poles of the electrical power line system each is provided for the or each room, wherein at least two room modules (10, 24) are on a data bus (16) with a higher-level distributor module (32), and at least two distributor modules (32) are on a data bus (34) with a higher-level monitoring and/or measuring and/or closed-loop control and/or open-loop control module (central module 36).

2. Device according to claim 1, **characterized in that** the room module (10, 24) is provided with integrated sensor system (18) for temperature and/or brightness and/or air composition, particularly concentration of CO₂, other gases or smoke, and/or movement in the room.

3. Device according to claim 1 or 2, **characterized in that** at least one power terminal (20) of the room module (10, 24) can be controlled on/off.

4. Device according to one of claims 1 to 3, **characterized in that** the output voltage of at least one power terminal (22) of the room module (10, 24) can be regulated and/or controlled continuously or in steps.

5. Device according to one of claims 1 to 4, **characterized in that** the distributor modules (32) are programmable.

6. Device according to one of claims 1 to 5, **characterized in that** at least one distributor module (32) communicates with the outside world.

7. Device according to one of claims 1 to 6, **characterized in that** the central module (36) is programmable.

8. Device according to one of claims 1 to 7, **characterized in that** the central module (36) communicates with the outside world.

## Revendications

1. Dispositif d'automatisation dans le domaine de la technique d'exploitation ainsi que, le cas échéant, de surveillance pour la sécurité d'un bâtiment, d'une installation industrielle, d'un complexe immobilier et/ou industriel ou d'une unité d'exploitation de ceux-ci, qui comprend plusieurs pièces et dans lequel/laquelle pour chaque pièce un module de surveillance et/ou de mesure et/ou de régulation et/ou de commande (module de pièce 10, 24) est équipé d'un système de détection (18) intégré et d'un ou plusieurs raccordement(s) de puissance électrique(s) (20, 22) avec chacun pas plus que les pôles du réseau d'alimentation électrique, auquel cas au moins deux modules de pièce (10, 24) avec un module supérieur de distribution (32) se trouvent dans un bus de données (16), et au moins deux modules de distribution (32) avec un module supérieur de surveillance et/ou de mesure et/ou de régulation et/ou de commande (module central 36) se trouvent dans un bus de données (34).

2. Dispositif selon la revendication 1, **caractérisé en ce que** le module de pièce (10, 24) est équipé d'un système de détection (18) intégré de la température et/ou de la luminosité et/ou de la composition de l'air, en particulier de la concentration en CO₂, d'autres gaz ou de fumée et/ou de mouvement dans la pièce.

3. Dispositif selon la revendication 1 ou 2, **caractérisé en ce qu'**au moins un raccordement de puissance (20) du module de pièce (10, 24) peut être contrôlé en prise libre.

4. Dispositif selon l'une des revendications 1 à 3, **caractérisé en ce qu'**au moins un raccordement de puissance (22) du module de pièce (10, 24) peut être contrôlé et/ou régulé dans sa tension de sortie de façon continue ou par paliers.

5. Dispositif selon l'une des revendications 1 à 4, **caractérisé en ce que** les modules de distribution (32) peuvent être programmés.

6. Dispositif selon l'une des revendications 1 à 5, **caractérisé en ce qu'**au moins un module de distribution (32) communique avec le monde extérieur.

7. Dispositif selon l'une des revendications 1 à 6, **caractérisé en ce que** le module central (36) peut être programmé.

8. Dispositif selon l'une des revendications 1 à 7, **caractérisé en ce que** le module central (36) communique avec le monde extérieur.
